(19) Europäisches Patentamt
European Patent Office
Office européen des brevets

(11) **EP 2 343 847 A1**

(12) **EUROPEAN PATENT APPLICATION**
published in accordance with Art. 153(4) EPC

(43) Date of publication:
**13.07.2011 Bulletin 2011/28**

(51) Int Cl.:
*H04J 99/00* (2009.01)    *H04B 7/005* (2006.01)
*H04B 7/04* (2006.01)

(21) Application number: **08877705.7**

(22) Date of filing: **28.10.2008**

(86) International application number:
**PCT/JP2008/069540**

(87) International publication number:
**WO 2010/049993 (06.05.2010 Gazette 2010/18)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Hitachi, Ltd.**
**Chiyoda-ku**
**Tokyo 100-8280 (JP)**

(72) Inventors:
• **HAYASE, Shigenori**
**Chiyoda-ku, Tokyo 100-8220 (JP)**
• **YANO, Takashi**
**Chiyoda-ku, Tokyo 100-8220 (JP)**
• **JIA, Yunjian**
**Chiyoda-ku, Tokyo 100-8220 (JP)**

(74) Representative: **MERH-IP**
**Matias Erny Reichl Hoffmann**
**Paul-Heyse-Straße 29**
**80336 München (DE)**

(54)    **MULTI-USER MIMO WIRELESS COMMUNICATION METHOD AND MULTI-USER MIMO WIRELESS COMMUNICATION DEVICE**

(57)    The present invention achieves a communication speed close to a theoretical limitation with suppressing a computing amount and without increasing protocol overhead. In a multiuser MIMO wireless communication method according to the present invention, a receive weight matrix is determined based on a channel matrix, the channel matrix is updated by a product of the receive weight matrix and a channel matrix, a transmitted signal is generated in a ZF-DPC method based on the updated channel matrix and transmitted, and the receive weight matrix is multiplied with a received signal and then subjected to a DPC decoding. A method of determining a receive weight matrix is to take a conjugate transpose matrix of a left singular matrix obtained when subjecting the channel matrix to a singular value decomposition.

*FIG. 1*

START

ESTIMATE CHANNEL MATRIX $H_i$ — 101

DECIDE WEIGHT MATRIX $R_i$ — 102

UPDATE CHANNEL MATRIX: $H_i \leftarrow R_i H_i$ — 103

DATA TRANSMISSION BY ZF-DPC — 104

MULTIPLY RECEIVED SIGNAL VECTOR BY RECEIVE WEIGHT MATRIX $R_i$ — 105

DECODE RECEIVED SIGNAL BY DPC — 106

END

EP 2 343 847 A1

**Description**

## TECHNICAL FIELD

The present invention relates to a method of multiuser MIMO (Multiple-Input Multiple-Output) wireless communication among a transmitter and a plurality of receivers, and a device of multiuser MIMO wireless communication which communicates in the method of multiuser MIMO wireless communication.

## BACKGROUND ART

To this day, an achievable upper limit value of communication speed in the multiuser MIMO has been theoretically derived (for example, see S. Vishwanath, N. Jindal, and A. Goldsmith, "Duality, achievable rates, and sum-rate capacity of gaussian MIMO broadcast channels", IEEETrans. Inform. Theory, vol. 49, no. 10, pp. 2658-2668, Oct. 2003 (Non-Patent Document 1)).

Also, to this day, as technology of obtaining performance close to a theoretical limitation in the multiuser MIMO method, there has been technology called DPC (Dirty Paper Coding) (for example, see M. H. M. Costa, "Writing on dirty paper", IEEE Trans. Inform. Theory, vol. 29, no. 3, pp. 439-441, May 1983 (Non-Patent Document 2)).

Also, to this day, there has been a ZF-DPC (Zero-Forcing DPC) method achieving the multiuser MIMO method by subjecting a channel matrix to a QR decomposition and coding the same by DPC based on a triangular matrix L (for example, see Z. Tu and R. S. Blum, "Multiuser diversity for a dirty paper approach", IEEE Commun. Lett., vol. 7, no. 8, pp. 370-372, Aug. 2003 (Non-Patent Document 3)).

Moreover, to this day, there has been a CZF-DPC (Cooperative ZF-DPC) method achieving the multiuser MIMO method by subjecting a channel matrix to a singular value decomposition, selecting a stream and updating a transmit weight matrix and a receive weight matrix, and repeating update of the channel matrix so that the channel matrix is orthogonal to the transmit weight matrix (for example, see Japanese Patent Application Laid-Open Publication (translation of PCT application) No. 2008-519510 (Patent Document 1)).

> Patent Document 1: Japanese Patent Application Laid-Open Publication (translation of PCT application) No. 2008-519510
> Non-Patent Document 1: S. Vishwanath, N. Jindal, and A. Goldsmith, "Duality, achievable rates, and sum-rate capacity of gaussian MIMO broadcast channels", IEEE Trans. Inform. Theory, vol. 49, no. 10, pp. 2658-2668, Oct. 2003
> Non-Patent Document 2: M. H. M. Costa, "Writing on dirty paper", IEEE Trans. Inform. Theory, vol. 29, no. 3, pp. 439-441, May 1983
> Non-Patent Document 3: Z.. Tu and R. S. Blum, "Multiuser diversity for a dirty paper approach", IEEE Commun. Lett., vol. 7, no. 8, pp. 370-372, Aug. 2003

## DISCLOSURE OF THE INVENTION

## PROBLEMS TO BE SOLVED BY THE INVENTION

The MIMO wireless communication method is used in wireless LAN, WiMAX, etc. MIMO is a communication method which improves communication speed more than the situation in which a transmitter and a receiver are using one antenna, and MIMO improves stability of communication.. When MIMO is used, communications can be performed in a plurality of different signals using the same amount of time and the same frequency band.

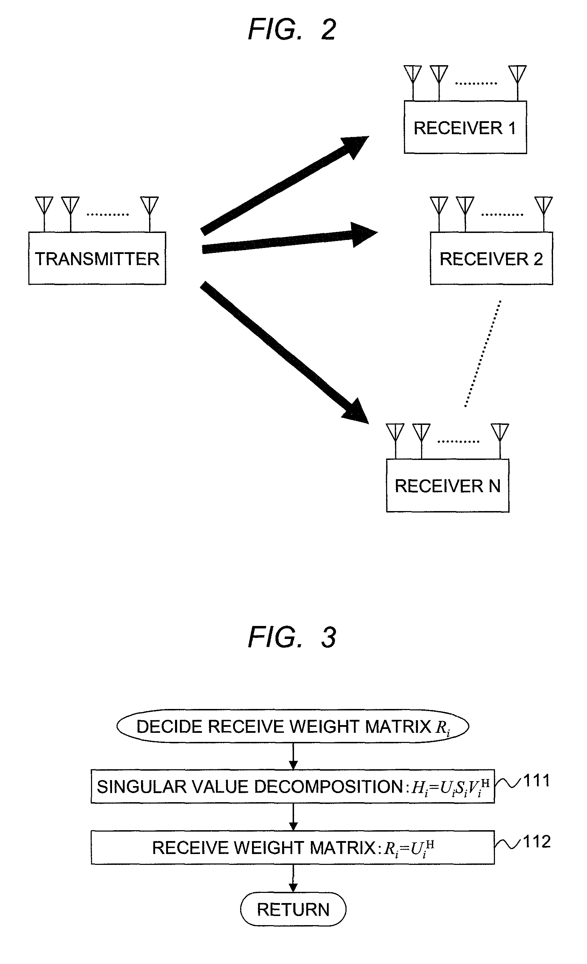

The transmitter not only transmits a plurality of different signals to a single receiver, and also is able to transmit the signals to a plurality of receivers as illustrated in the schematic diagram of FIG. 2. This is the multiuser MIMO method, and it can achieve a further speeding-up of the communication speed. In Non-Patent Document 1, an upper limit value of the communication speed achievable by the multiuser MIMO is theoretically conducted. To obtain performance close to the theoretical limitation by the multiuser MIMO method, the technology called DPC (Dirty Paper Coding) described in Non-Patent Document 2 is required.

Non-Patent Document 3 describes a ZF-DPC (Zero-Forcing DPC) method achieving the multiuser MIMO method by subjecting a channel matrix to an LQ decomposition and performing a DPC coding based on a triangular matrix L. Further, Non-Patent Document 3 describes that performance can be improved by changing the order of rows in the channel matrix upon the LQ decomposition.

Patent Document 1 describes a CZF-DPC (Cooperative ZF-DPC) method achieving the multiuser MIMO method by subjecting a channel matrix to a singular value decomposition, selecting a stream and updating a transmit weight matrix and a receive weight matrix, and repeating updating so that channel matrix is perpendicular to the transmit weight matrix. Further, Patent Document 1 describes that THP (Tomlinson-Harachima Precoding) can be used as a method of mounting the DPC.

It has been known that an achievable speed of the ZF-DPC method is low and it does not reach the communication speed of the theoretical limitation.

It has been known that a necessary computation amount is large in the CZF-DPC method. Therefore, a necessary circuit size is large for computation. In addition, as the amount of time taken for the computation is increased, a time from a generation of a request of data transmission to actual data transmission, that is, delay is increased.. Moreover, the receive weight matrix can be determined only by the transmitter, it is necessary to notify the receiver about the determined receive weight matrix, and thus protocol overhead occurs.

The present invention achieves a communication speed close to the theoretical limitation with suppressing the computation amount small and without increasing protocol overhead.

## MEANS FOR SOLVING THE PROBLEMS

The typical ones of the inventions will be briefly described as follows.. More specifically, a method of multiuser MIMO wireless communication according to the present invention transmits from a first wireless communication device to N devices of, i.e., 2-1 to 2-N wireless communication devices using a same frequency band and a same duration, the method including: a first step of estimating a channel matrix among the first wireless communication device to the 2-1 to 2-N wireless communication devices; a second step of determining a receive weight matrix to be multiplied with a received signal vector in the 2-1 to 2-N wireless communication devices; a third step of updating the channel matrix by a multiply of the receive weight matrix and the channel matrix; a fourth step of decomposing the channel matrix into a lower triangular matrix L and a unitary matrix Q by an LQ decomposition of the updated channel matrix; a fifth step of subjecting a transmit signal vector to a DPC coding based on the lower triangular matrix L; a sixth step of transmitting a transmitted signal vector obtained by multiplying the coded transmitted signal vector and a conjugate transpose matrix of the unitary matrix Q from the first wireless communication device; a seventh step of multiplying a received signal vector received by the 2-1 to 2-N wireless communication devices with the determined receive weight matrix; and an eighth step of subjecting the received signal vector obtained by multiplying the receive weight matrix to a DPC decoding.

In addition, a device of multiuser MIMO wireless communication according to the present invention transmits from a first wireless communication device to N devices of, i.e., 2-1 to 2-N wireless communication devices using a same frequency band and a same duration, in which the first wireless communication device includes a functional block performing: a first step of determining a receive weight matrix to be multiplied with a received signal vector in the 2-1 to 2-N wireless communication devices; a second step of updating the channel matrix by multiplying the receive weight matrix and the channel matrix; a third step of decomposing the channel matrix into a lower triangular matrix L and a unitary matrix Q by an LQ decomposition of the updated channel matrix; a fourth step of subjecting a transmitted signal vector to a DPC coding based on the lower triangular matrix L; and a fifth step of transmitting a transmitted signal vector obtained by multiplying the coded transmitted signal vector with a conjugate transpose matrix of the unitary matrix Q to the 2-1 to 2-N wireless communication devices.

## EFFECTS OF THE INVENTION

According to the present invention, a high communication speed can be achieved in the multiuser MIMO method with a small computation amount.

## BRIEF DESCRIPTIONS OF THE DRAWINGS

FIG. 1 is a diagram illustrating a communication procedure of a first embodiment of the present embodiment;
FIG. 2 is a conceptual diagram of multiuser MIMO wireless communication;
FIG. 3 is a diagram illustrating an example of a step of determining a receive weight matrix;
FIG. 4 is a diagram illustrating an example of a step of determining a receive weight matrix;
FIG. 5 is a diagram illustrating a procedure of transmitting data based on ZF-DPC method;
FIG. 6 is a graph illustrating effects of the present invention;
FIG. 7 is a diagram illustrating a communication procedure according to a second embodiment of the present invention;
FIG. 8 is a diagram illustrating a communication procedure according to a third embodiment of the present invention;
FIG. 9 is a diagram illustrating a communication procedure according to a fourth embodiment of the present invention;
FIG. 10 is a diagram illustrating a configuration of a wireless communicator according to a fifth embodiment of the present invention;
FIG. 11 is a diagram illustrating a detailed configuration of a ZF-DPC coding portion;
FIG. 12 is a diagram illustrating a configuration of a wireless communicator according to a sixth embodiment of the present invention;
FIG. 13 is a diagram illustrating a configuration of an existing wireless communicator according to an existing ZF-DPC method;
FIG. 14 is a diagram illustrating a configuration of a wireless communicator according to a seventh embodiment of the present invention;
FIG. 15 is a diagram illustrating a configuration of a wireless communicator according to an eighth embodiment of the present invention; and
FIG. 16 is a diagram illustrating a configuration of a wireless communicator according to a ninth embodiment of the present invention.

**EXPLANATION OF REFERENCES**

101 Block of channel matrix estimation process
102 Block of receive weight matrix determination process
103 Block of channel matrix updating process
104 Block of ZF-DPC data transmission process
105 Block of receive weight matrix multiplication process
106 Block of DPC decoding process
107 Block of LQ decomposition process
108 Block of DPC coding process
109 Block of matrix multiplication process
110 Block of transmission process
111 Block of singular value decomposition process
112 Block of receive weight assignment process
113 Block of QR decomposition process
114 Block of receive weight assignment process
201 Block of training signal transmission process
202 Bock of training signal reception process
203 Block of channel matrix estimation process
204 Block of channel matrix information transmission process
205 Block of channel matrix information reception process
206 Block of receive weight matrix determination process
207 Block of channel matrix determination process
208 Block of ZF-DPC data transmission process
209 Block of data reception process
210 Block of receive weight matrix multiplication process
211 Block of DPC decoding process
301 Transmitted signal generating portion
302 ZF-DPC coding portion
303 Signal multiplexing portion
304 Training signal adding portion
305 Channel matrix obtaining portion
306 Receive weight matrix generating portion
307 Channel matrix updating portion
308 Data reconstructing portion
309 Analog front end
310 LQ decomposing portion
311 DPC coding portion
312 Transmit weight matrix multiplying portion
313 Signal splitting portion
314 Receive weight matrix multiplying portion
315 DPC decoding portion
316 Training signal extracting portion

317    Channel matrix estimating portion

## BEST MODE FOR CARRYING OUT THE INVENTION

In a method of multiuser MIMO wireless communication according to the present invention, a receive weight matrix is determined based on a channel matrix, the channel matrix is updated by multiplying the receive weight matrix and the channel matrix, a transmitted signal vector is generated by a ZF-DPC method based on the updated channel matrix and transmitted, and a receive weight matrix is multiplied with a received signal vector and then subjected to a DPC decoding.

One method of determining the receive weight matrix is a method of taking a conjugate transpose matrix of a left singular matrix obtained when subjecting the channel matrix to a singular value decomposition.

According to the present invention, as in the conceptual diagram illustrated in Fig. 2, a multiuser MIMO wireless communication transmitting data from one transmitter to N devices of receivers (receiver 1, receiver 2, ..., receiver N) is assumed.. Following a data communication destination of the multiuser MIMO wireless communication method, respective wireless communication devices will be called transmitter and receiver as a matter of convenience. Each of these wireless communication devices is a wireless communication device having both functions of transmission and reception. To achieve the multiuser MIMO wireless communication method, information except for the data is sometimes transmitted from a receiver to a transmitter. The transmitter has a plurality of antennas. The receivers not necessarily have the same number of antennas, and at least one of the receivers has a plurality of antennas. The transmitter/receiver corresponds to access points/user terminals in a wireless LAN system, and, base stations/mobile terminals in a cellular mobile communication system, while it is not limited to these.

Computation of matrix is expressed as follows.

A matrix (Expression 1) formed by aligning a plurality of matrices A1, A2, ..., Ax in the column direction is expressed as [A1, A2, ..., Ax].

$$\text{Expression 1} \qquad \begin{pmatrix} \mathbf{A}_1 & \mathbf{A}_2 & \cdots & \mathbf{A}_x \end{pmatrix} = \begin{bmatrix} \mathbf{A}_1, \mathbf{A}_2, \ldots, \mathbf{A}_x \end{bmatrix}$$

A matrix (Expression 2) formed by aligning a plurality of matrices A1, A2, ..., Ax in the row direction is expressed as [A1;A2; ... ;Ax] .

$$\text{Expression 2} \qquad \begin{pmatrix} \mathbf{A}_1 \\ \mathbf{A}_2 \\ \vdots \\ \mathbf{A}_x \end{pmatrix} = \begin{bmatrix} \mathbf{A}_1; \mathbf{A}_2; \ldots; \mathbf{A}_x \end{bmatrix}$$

A conjugate transpose matrix of the matrix A is expressed as Expression 3.

$$\text{Expression 3} \qquad \mathbf{A}^H$$

Hereinafter, embodiments of the present invention will be described. Note that "t" at the end of referential marks means processing by a transmitter, and "r" means processing by a receiver.

## First Embodiment

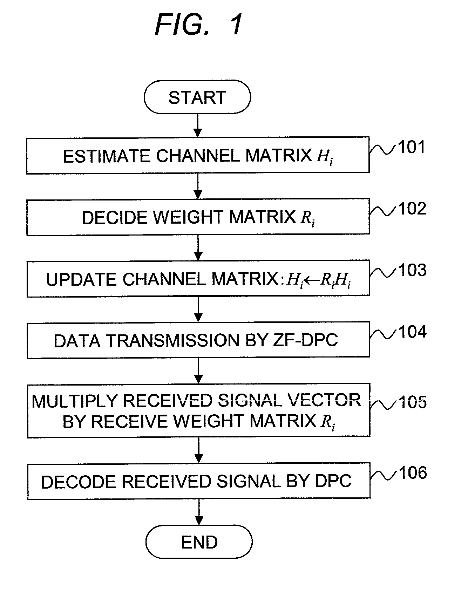

FIG. 1 is a first embodiment describing a procedure in the multiuser MIMO wireless communication method according to present invention.

In the present procedure, a channel matrix is estimated in a block 101, a receive weight matrix is determined in a block 102 based on the channel matrix, the channel matrix is updated by multiplying the receive weight matrix and the channel matrix in a block 103, a transmitted signal vector is generated by a ZF-DPC method based on the updated channel matrix and transmitted in a block 104, and a received signal vector is converted by being multiplied with the receive weight matrix in a block 105 and then subjected to a DPC decoding in a block 106.

The channel matrix means a complex gain upon propagation of wireless signals from each antenna of the transmitters to each antenna of the receivers. A relationship between a transmitted signal vector x = [x1;x2;...;xm] composed of signals x1, x2, ..., xm transmitted from antennas 1, 2, ..., m of the transmitters and a received signal vector y = [y1;y2;...;yn] composing signals y1, y2, ... yn received by antennas 1, 2, ..., n of the receivers can be expressed as Expression 4 with a channel matrix H (noise is omitted in the expression).

$$\text{Expression 4} \qquad \mathbf{y} = \mathbf{H}\mathbf{x} \quad \Leftrightarrow \quad \begin{pmatrix} y_1 \\ y_2 \\ \vdots \\ y_n \end{pmatrix} = \begin{pmatrix} h_{11} & h_{12} & \cdots & h_{1m} \\ h_{21} & h_{22} & & h_{2m} \\ \vdots & & \ddots & \vdots \\ h_{n1} & h_{n2} & \cdots & h_{nm} \end{pmatrix} \begin{pmatrix} x_1 \\ x_2 \\ \vdots \\ x_m \end{pmatrix}$$

To estimate the channel mat.rix, changes in amplitude and phase of a signal may be detected after sending a known signal decided between the transmitter and receiver. The known signal is called training signal.

Since channel matrices between the transmitter and the N devices of receivers are estimated, N pieces of channel matrices Hi (i = receiver number, 1 to N) are obtained in the block 101. In the block 102, based on the obtained channel matrices Hi, a receive weight matrix Ri to be multiplied with a received signal vector in a receiver i is determined. In the block 103, a product RixHi of the receive weight matrix Ri and the channel matrix Hi is computed, and the channel matrix Hi is updated by a result of that. In the block 104, a transmitted signal vector is processed in the technique of ZF-DPC method based on a channel matrix H' = [H1;H2;...;HN] (Expression 5) to all of the receivers, in which the obtained channel matrices Hi are lined up in the row direction, and transmitted.

$$\text{Expression 5} \qquad H' = \begin{pmatrix} H_1 \\ H_2 \\ \vdots \\ H_N \end{pmatrix}$$

In the block 105, the receive weight matrix Ri is multiplied with the received signal vector of the receiver i. As the received signal vector is a vector yi = [yi1;yi2;...;yin] having the same number of components as the number of the receiver antennas, a signal obtained in the block 105 is Rixyi. This signal is subjected to a DPC decoding in the block 106.

While it is necessary that the block 104 is carried out in the transmitter and the blocks 105 and 106 are carried out in the receiver, the blocks 101, 102, 103 may be carried out in both the transmitter and receiver.

FIG. 3 is a procedure illustrating an example of a method of determining the receive weight matrix Ri of the block 102. In a block 111, a singular value decomposition of the channel matrix Hi is derived. The singular value decomposition is a computation for obtaining three matrices U, Σ, and V from the matrix H as expressed in Expression 6.

$$\text{Expression 6} \qquad \mathbf{H} = \mathbf{U}\Sigma\mathbf{V}^H$$

Here, U and V are unitary matrices, and Σ is a matrix in which only diagonal components are not zero. In the present invention, U is called left singular matrix, and V is called right singular matrix. A conjugate transpose matrix of the left singular matrix obtained by a singular value decomposition in a block 112 is set as the receive weight matrix.

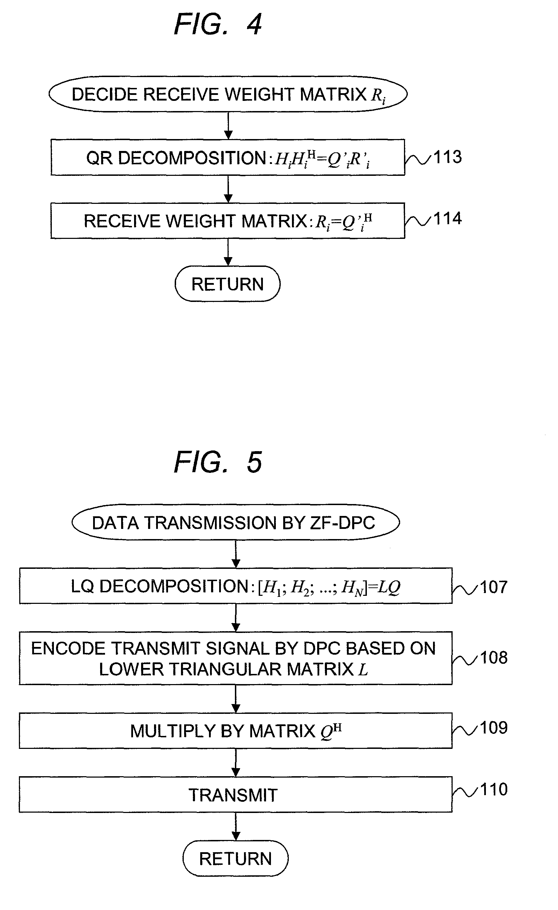

FIG. 4 is a procedure illustrating another example of a method of determining the receive weight matrix Ri in the block 102. In a block 113, a QR decomposition of Hi×Hi.H which is a product of the channel matrix Hi and its conjugate transpose matrix is derived. The QR decomposition is, as expressed in Expression 7, a computation for obtaining two matrices Q' and R' from the matrix A.

$$\text{Expression 7} \qquad A = Q' R'$$

Here, Q' is a unitary matrix, and R' is an upper triangular matrix. The upper triangular matrix R' is a different matrix from the receive weight matrix R. A conjugate transpose matrix of the unitary matrix Q' obtained by the QR decomposition in the block 114 is set as the receive weight matrix.

FIG. 5 is a procedure of the ZF-DPC of the block 104. This is the method described in Non-Patent Document 3. An LQ decomposition of the channel matrix H' = [H1;H2; ... ;HN] to all the receivers expressed in Expression 5 is obtained in a block 107. The LQ decomposition is a computation for obtaining two matrices L and Q as expressed in Expression 8.

$$\text{Expression 8} \qquad H' = LQ$$

Here, L is a lower triangular matrix, and Q is a unitary matrix. the transmitted signal vector is subjected to a DPC coding based on the lower triangular matrix L in a block 108. In a block 109, a conjugate transpose matrix QH of the unitary matrix Q is multiplied with a signal vector which has been subjected to a DPC coding, and an obtained signal vector is transmitted in a block 110. As the signal vector which has been subjected to the DPC coding in the block 108 is a vector x = [x1;x2;...;xm] having the same number of components as the number of the transmitter antennas, a signal vector obtained in the block 110 is QHxx.

Non-Patent Document 3 describes a method (Greedy algorithm) for improving performance by computing while exchanging rows of the channel matrix H, and it is effective to use the Greedy algorithm also in the present invention. In the ZF-DPC, the Greedy algorithm allocates signals in descending order of sum of squared absolute values of respective row components in the channel matrix to all the receivers. That is, it allocates in descending order of gain of the received signals. Therefore, when a receive weight matrix is previously determined and multiplied with a channel matrix as the present invention, it is possible to change an effective gain of signal and thus it is possible to adjust so that a high communication speed is obtained. As described above, there are examples of the method of subjecting the channel matrix to a singular value decomposition and taking a conjugate transpose matrix of the left singular matrix as the receive weight matrix, and the method of taking a conjugate transpose matrix of the unitary matrix obtained by the QR decomposition of the channel matrix and its conjugate transpose matrix as the receive weight matrix. In this case, by combining the received signal by the receive weight matrix, a signal having a large effective gain is generated, thereby obtaining a larger gain upon allocating signals by the Greedy algorithm.

Patent Document 1 describes that THP can be used as the DPC coding carried out in the block 108, and the DPC coding can be performed using THP also in the present invention.

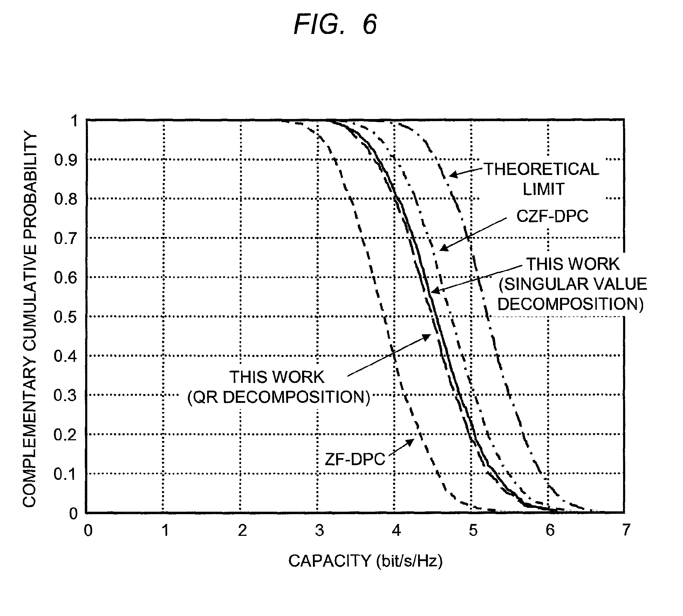

FIG. 6 is a graph illustrating effects of the present invention. Multiuser MIMO wireless communication among a transmitter having four antennas and three receivers having three antennas is assumed. An average SNR in the receivers is uniformly 0 dB and a transmission path among the transmitter/receivers is i.i.d. Rayleigh Fading channel. A probability distribution of transmission capacity is derived by the Monte Carlo method of generating 1000 pieces of channel matrices in random numbers. The horizontal axis of the graph is an achievable transmission capacity, and the vertical axis is a complementary cumulative probability. According to the present invention, a transmission capacity higher than that of ZF-DPC and close to that of CZF-DPC can be achieved. While the transmission capacity of theoretical limitation is getting higher, when also using transmission power control of parallel transmitted signals together, it is possible to achieve a transmission capacity closer to the theoretical limitation.

The present invention is also effective in reduction of computation amount. For carrying out MIMO wireless communication, a singular value decomposition is a process having the biggest computation amount. While it is necessary to carry out the singular value decomposition for (number of receivers) x (number of parallel transmissions) cycles in the CZF-DPC, in the method of the present invention, it is only necessary to carry out for (number of receivers) cycles when using the method of determining receive weight matrix by the singular value decomposition of FIG. 3, and the singular value decomposition is not carried out when using the receive weight matrix by the QR decomposition of FIG. 4. According to the conditions of FIG. 6, the number of receivers is three, and the number of parallel transmissions is equal to the number of transmission antennas, i.e., four. Therefore, while twelve cycles of singular value decomposition are necessary in the CZF-DPC, only three cycles of singular value decomposition are necessary in the receive weight determination by the singular value decomposition of the present invention, and the number of cycles is zero in the receive weight determination by the QR decomposition. In this manner, the computation amount can be largely reduced.

Upon the determination of receive weight matrix by the QR decomposition of FIG. 4, in the same manner as the Greedy algorithm described above, the effect is large when computing the matrix HixHiH with exchanging rows of HixHiH so that diagonal components of the upper triangular matrix R' are lined up in descending order from the upper left..

It is not necessary to use the method of determining receive weight matrix all the same from the receiver 1 to receiver N. For example, a receiver which determines a receive weight matrix by the singular value decomposition and a receiver which determines a receive weight matrix by the QR decomposition may exist together.

The receive weight determination method can be other methods than those illustrated in FIGS. 3 and 4. For example, the channel matrix Hi itself can be subjected to the QR decomposition instead of the matrix HixHiH upon performing the QR decomposition in FIG. 4.

**Second Embodiment**

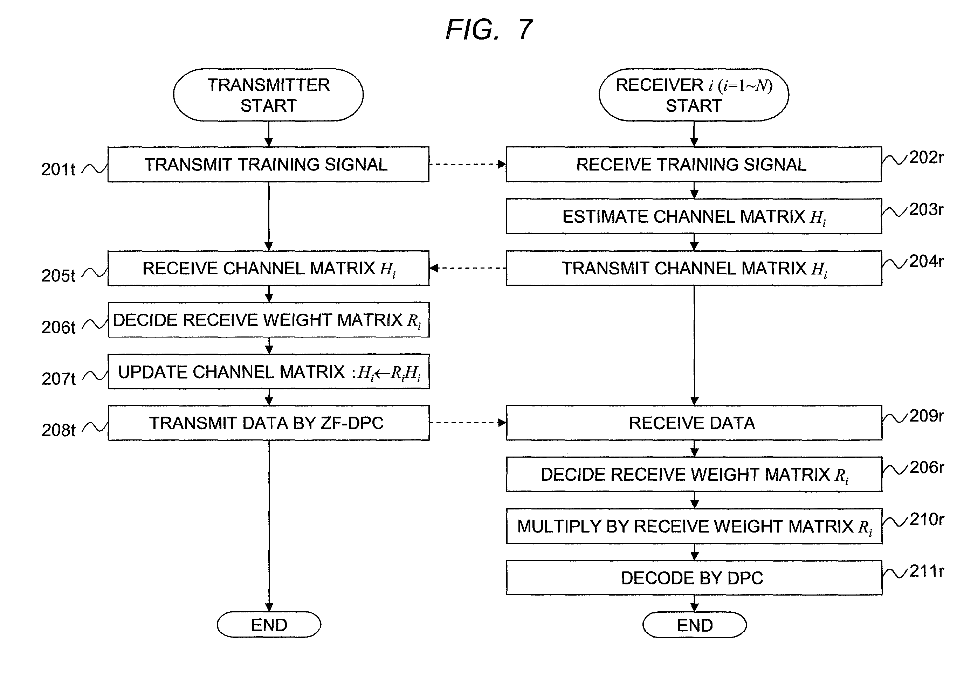

FIG. 7 is a second embodiment describing procedures in each of a transmitter and a receiver in a method of multiuser MIMO wireless communication according to the present invention.

The transmitter transmits a training signal for estimating a channel matrix in a block 201t. A receiver i (i = 1 to N) receives the training signal in a block 202r, estimates a channel matrix in a block 203r based on the training signal, and transmits channel matrix information to the transmitter in a block 204r. The transmitter receives the channel matrix information transmitted from the receiver i in a block 205t. As the channel matrix information is transmitted from the N pieces of receivers, in accordance with that, a plurality of channel matrix information items are received in the block 205t. The transmitter determines a receive weight matrix Ri based on the obtained channel matrix Hi in a block 206t. The transmitter calculates a product of the receive weight matrix Ri and the channel matrix Hi in a block 207t and updates the channel matrix Hi according to a result of the calculation. The transmitter transmits data in the technique of ZF-DPC based on the updated channel matrix Hi in a block 208t. In the block 208t, data may be transmitted with adding a training signal thereto. The receiver i receives in a block 209r. The receiver determines a receive weight matrix Ri in a block 206r and multiplies the receive weight matrix Ri with a received signal in a block 210r, and performs a DPC decoding in a block 211r.

The procedure of the present embodiment is such that the estimation of channel matrix of the block 101 in the first embodiment is carried out by the receiver, and the determination of receive weight matrix in the block 102 and the update of channel matrix in the block 103 are carried out by the transmitter.

Based on the channel matrix obtained in the block 203r or the newly estimated channel matrix Hi upon receiving in the block 209r, the receive weight matrix Ri can be determined in the block 206r. This is possible because the receive weight matrix Ri of the receiver i can be determined only by the channel matrix Hi of the receiver i. For example, while the receive weight matrix is multiplied with the received signal also in CZF-DPC, since it is necessary to know all the channel matrices H1, H2, ...., HN to determine the receive weight matrix Ri of the receiver i, it is not possible to determine the receive weight matrix by the receiver same as the present invention. Therefore, in CZF-DPC, the transmitter has to transmit information of the receive weight matrix to all the receivers and protocol overhead is increased; this problem is solved according to the present invention. In the present invention, while one extra step is added when using a channel matrix in other receivers than the receiver in the determination of receive weight matrix, there is no problem if information of the receive weight matrix determined in the block 206t is previously notified by the transmitter to the receiver.

To determine the receive weight matrix Ri based on the channel matrix Hi obtained in the block 203r, the receive weight matrix Ri can be determined prior to data reception by arranging the block 206r before the block 209r.

**Third Embodiment**

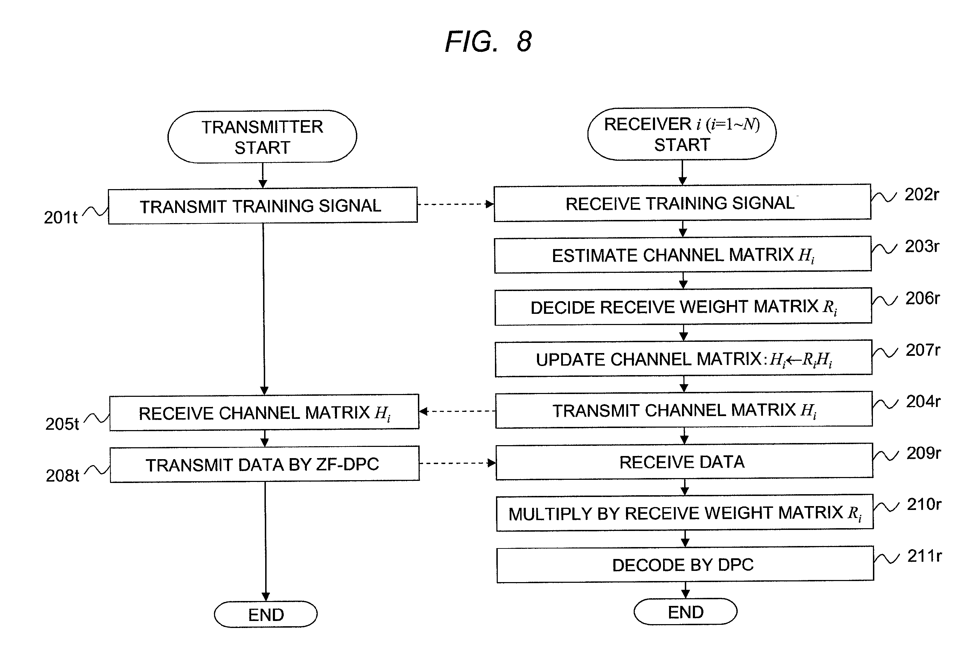

FIG. 8 is a third embodiment describing procedures in both a transmitter and a receiver in a multiuser MIMO wireless communication method according to the present invention.

A transmitter transmits a training signal for estimating channel matrix in a block 201t. A receiver i (i = 1 to N) receives a training signal in a block 202r and estimates a channel matrix Hi in a block 203r based on that, and determines a receive weight matrix Ri based on the obtained channel matrix Hi in a block 206r. A product of the receive weight matrix Ri and the channel matrix Hi is calculated in a block 207r, and the channel matrix Hi is updated by a result of the calculation. Channel matrix information updated in a block 204r is transmitted to the transmitter. Channel matrix information transmitted from a receiver i is received by the transmitter in a block 205t. As the channel matrix information is transmitted from N pieces of receivers, in accordance with that, a plurality of channel matrix information items are received in the block 205t. The transmitter transmits data in the technique of ZF-DPC based on the channel matrix Hi updated in a block 208t. In the block 208t, data may be transmitted with adding a training signal thereto. The receiver i receives in a block 209r. The receive weight matrix Ri is multiplied with the received signal in a block 210r and subjected to a DPC decomposition in a block 211r.

The procedure of the present embodiment is such that the estimation of channel matrix in the block 101, the determination of receive weight matrix in the block 102, and the update of channel matrix in the block 103 are carried out by the receiver.

The receive weight matrix Ri multiplied in the block 210r can be a receive weight matrix determined in the block 206r, or a receive weight matrix obtained by newly estimating a channel matrix upon data reception in the block 209r and recalculating based on the channel matrix. As the receive weight matrix can be determined by the receiver, protocol overhead does not occur as explained in the description of the second embodiment.

What is different from the second embodiment is to perform the update of channel matrix in the block 207r by the receiver instead of the transmitter. Therefore, processing about the receive weight matrix is not necessary in the transmitter, and the procedure by the transmitter is the same as the existing ZF-DPC method. According to the present embodiment, the transmitter does not change the procedure of the existing ZF-DPC method, and only the receiver is changed to the procedure of the present invention, thereby obtaining the effects of the present invention.

**Fourth Embodiment**

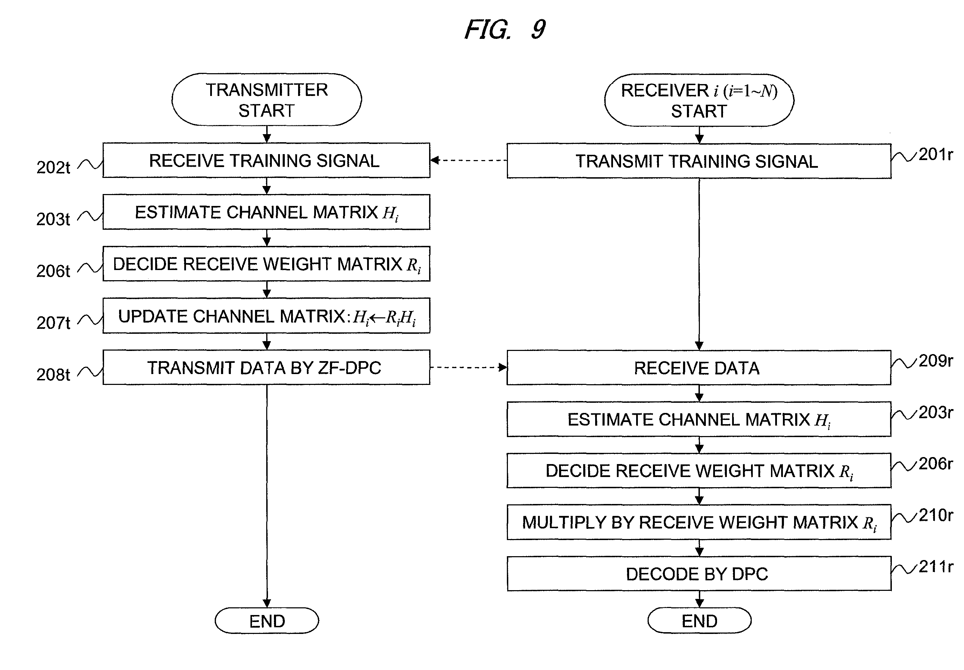

FIG. 9 is a fourth embodiment describing procedures of both a transmitter and a receiver in a multiuser MIMO wireless communication method of the present invention.

A receiver i (i = 1 to N) transmits a training signal for estimating channel matrix in a block 201r. A transmitter receives a training signal in a block 202t, and estimates a channel matrix Hi based on that in a block 203t. As the training signal is transmitted from the N pieces of receivers, in accordance with that, a plurality of training signals are received in the block 202t. The transmitter determines a receive weight matrix Ri in a block 206t. The transmitter calculates a product of the receive weight matrix Ri and the channel matrix Hi in a block 207t and updates the channel matrix Hi based on a result of the calculation. The transmitter transmits data in the technique of ZF-DPC based on the updated channel matrix Hi in a block 208t. In the block 208t, data may be transmitted with adding the training signal thereto. The receiver i receives in a block 209r. As the training signal is normally added upon data transmission, the receiver i can estimate the channel matrix Hi based on the received training signal in a block 203r. A receive weight matrix is determined based on the channel matrix Hi in a block 206r, and the receive weight matrix is multiplied with a received signal in a block 210r. An obtained signal is subjected to a DPC decoding in a block 211r.

The procedure of the present embodiment is such that the estimation of channel matrix in the block 101, the determination of receive weight matrix in the block 102, and the update of channel matrix in the first embodiment are carried out by the transmitter.

In the present embodiment, using the duality between the channel matrix in the propagation from the transmitter to receiver and the channel matrix of the propagation from the receiver to transmitter, the channel matrix is estimated by the transmitter. In the second and third embodiments, two kinds of communication of the transmission of the training signal from the transmitter to the receiver before the data transmission and the transmission of channel matrix from the receiver to transmitter have been necessary. As compared with that, in the present embodiment, the procedure is finished only by the transmission of training signal from the receiver to transmitter, and thus protocol overhead can be reduced. Also, the receive weight matrix can be determined by the receiver, and thus protocol overhead does not occur as explained in the description of the third embodiment.

**Fifth Embodiment**

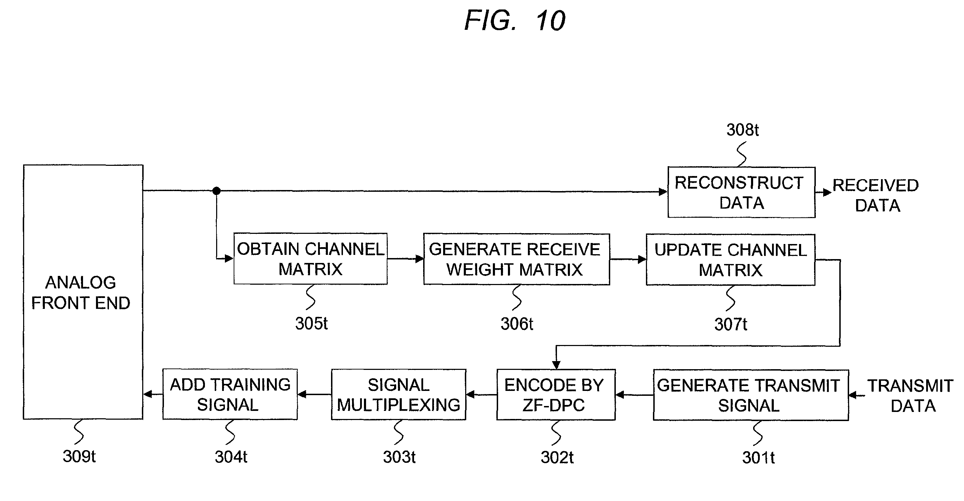

FIG. 10 is a fifth embodiment describing a configuration of a transmitter which communicates in the multiuser MIMO wireless communication method of the present invention in the procedure described in the second embodiment.

After the transmitted data is converted to a transmitted signal in a transmitted signal generating portion 301t, a ZF-DPC coding is carried out in a ZF-DPC coding portion 302t. Then, the transmitted data is subjected to a multiplexing in a signal multiplexing portion 303t, and added with a training signal in a training signal adding portion 304t, and inputted to an analog front end 309t and transmitted. A received signal is inputted from the analog front end 309t to a data reconstructing portion 308t and a channel matrix obtaining portion 305t. Received data is obtained from the data reconstructing portion 308t. The channel matrix obtaining portion 305t estimates a channel matrix by receiving a training signal and so forth and a receive weight matrix is determined in a receive weight matrix generating portion 306t. From a result of that, the channel matrix is updated in a channel matrix updating portion 307t, and inputted to the ZF-DPC coding portion 302t.

The transmitted signal generating portion 301t includes, in accordance with its communication method, a scrambler, an error correction coding portion, a QAM mapper, a transmission power controlling portion, etc. Also, an outputted signal is a signal vector having components of the number of parallel transmissions in the multiuser MIMO wireless communication.

The signal multiplexing portion 303t is necessary for a multiplex communication method such as the OFDM method. In the OFDM method, an inverse discrete Fourier transform is carried out in the signal multiplexing portion 303t. When the signal multiplexing such as single carrier transmission is not necessary, the signal multiplexing portion 303t is also not necessary.

While the training signal adding portion 304t is disposed immediately before the analog front end 309t, the disposing portion of the training signal adding portion 304t is not particularly limited to this. The training signal adding portion 304t may be disposed before the signal multiplexing portion 303t or before the ZF-DPC coding portion 302t.

The analog front end 309t mutually converts signals and radio waves and transmits and receives the same, including an antenna, a filter, a signal amplifier, an up/down converter, a quadrature modulator (orthogonal modulator) /demodulator, an AD converter, a DA converter, etc.

The data reconstructing portion 308t reconstructs data transmitted from the receiver to the transmitter, including an OFDM splitting portion (discrete Fourier transfer), a MIMO receive weight matrix multiplexing portion, a QAM demapper, an error correction decoding portion, a descrambler, etc. in accordance with its communication method.

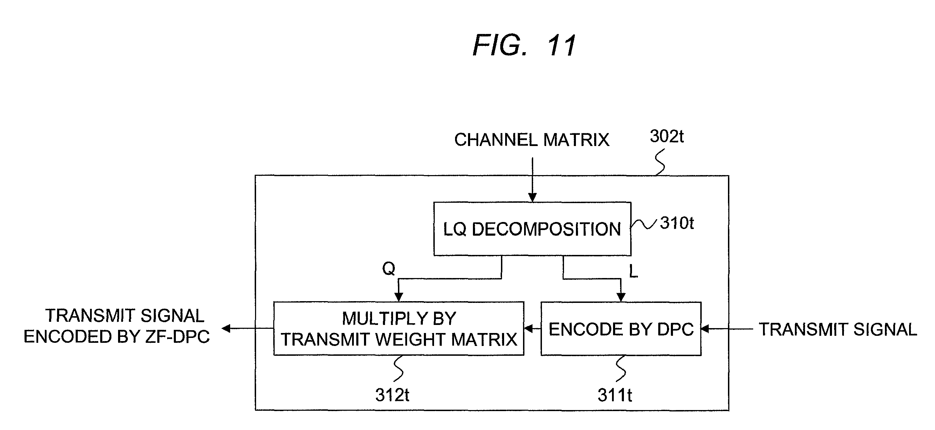

FIG. 11 is a diagram illustrating a detailed configuration of the ZF-DPC coding portion. A channel matrix is inputted to the LQ decomposing portion 310t and a lower triangular matrix L is inputted to the DPC coding portion 311t and a unitary matrix Q is inputted to the transmission weight matrix multiplying portion 312t. Transmitted signals are subjected to a DPC coding in a DPC coding portion 311t based on the lower triangle matrix L, and inputted to the transmission weight matrix multiplying portion 312t. The transmission weight matrix multiplying portion 312t multiplexes a conjugate transpose matrix of the unitary matrix Q with the signal after the DPC coding. The DPC coding portion 311t can perform coding using THP.

In the following, checking from the procedure of the transmitter of the second embodiment will be made. By transmitting the training signal added in the training adding portion 304t from the analog front end 309t, the training signal transmission of the block 201t is carried out. By obtaining a channel matrix in the channel matrix obtaining portion 305t from the signal received by the analog front end 309t, the reception of channel matrix of the block 205t is carried out. In the receive weight matrix generating portion 306t and the channel matrix updating portion 307t, the determination of receive weight matrix of the block 206t and the update of channel matrix of the block 207t are carried out. By transmitting the signal subjected to processing in the ZF-DPC coding 302t from the analog front end 309t, the data transmission of the block 208t is carried out. In this manner, the transmission procedure described in the second embodiment can be carried out.

**Sixth Embodiment**

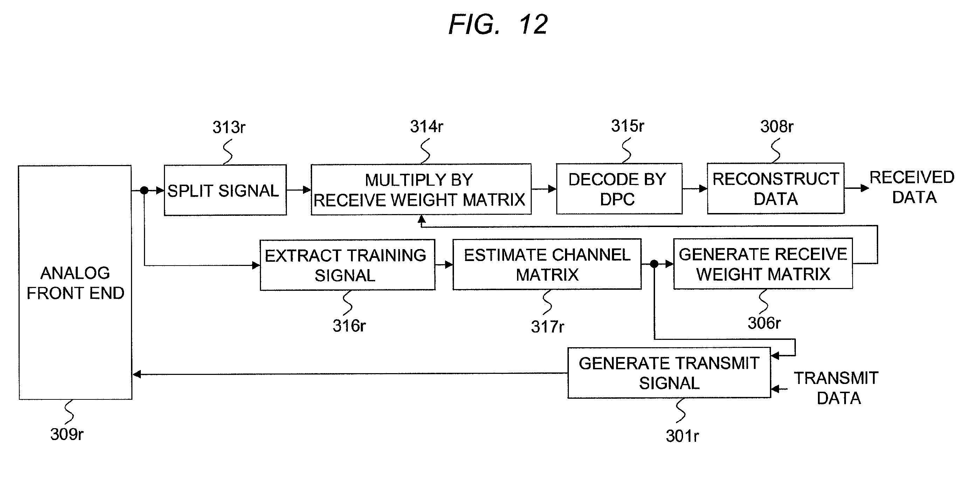

FIG. 12 is a sixth embodiment describing a configuration of a receiver which communicates in the multiuser MIMO wireless communication method in the procedure described in the second embodiment.

The transmitted data is converted to a transmitted signal in a transmitted signal generating portion 301r, and then transmitted by an analog front end 309r. The received signal is inputted from the analog front end 309r to a signal splitting portion 313r and a training signal extracting portion 316r. In the signal splitting portion, multiplexed signals are split and inputted to a receive weight matrix multiplying portion 314r. In the receive weight matrix multiplexing portion 314r, a receive weight matrix obtained from a receive weight matrix generating portion 306r is multiplied with the received signal, and a result of it is decoded by a DPC decoding portion 315r, thereby obtaining received data from a data reconstructing portion 308r. A training signal is extracted from the received signal in a training signal extracting portion 316r, and a channel matrix is obtained in a channel matrix estimating portion 317r based on a result of the extraction and is inputted to the receive weight matrix generating portion 306r. In the receive weight matrix generating portion 306r, a receive weight matrix is calculated from the channel matrix and inputted to the receive weight matrix multiplying portion 314r. The channel matrix obtained in the channel matrix estimating portion 317r is inputted also to the transmitted signal generating portion 301r, and used in the transmission to the transmitter.

The transmitted signal generating portion 301r includes, in accordance with its communication method, a scrambler, an error correction coding portion, a QAM mapper, a transmission power control portion, a MIMO transmission weight multiplying portion, an OFDM multiplexing portion (inverse discrete Fourier transform), etc.

The signal splitting portion 313r is necessary in a multiplex communication method such as the OFDM method. In the OFDM method, a discrete Fourier transfer is carried out in the signal splitting portion 313r. When a signal multiplexing such as single carrier transmission is not necessary, the signal splitting portion 313r is also not necessary.

A decoding processing corresponding to a DPC coding is performed in a DPC decoding portion 315r. Specifically, when THP is used in the DPC coding, a residue calculation is performed in the DPC decoding portion 315r.

The data decoding portion 308r includes a QAM demapper, an error correction decoding portion, a descrambler, etc.

The analog front end 309r mutually converts signals and radio waves and transmits and receives the same, including an antenna, a filter, a signal amplifier, an up/down converter, an orthogonal modulator/demodulator, an AD converter, a DA converter, etc.

In the following, checking from the procedure of the transmitter of the second embodiment will be made. A training signal is extracted in the training signal extracting portion 316r from the signal received in the analog front end 309r, and a channel matrix is estimated in the channel matrix estimating portion 317r, thereby carrying out the reception of training signal of the block 202r and the estimation of channel matrix of the block 203r. The channel matrix information is converted to a signal in the transmitted signal generating portion 301r and transmitted from the analog front end 309r, thereby carrying out the transmission of channel matrix of the block 204r. As the analog front end 309r receives signals, the data reception of the block 209r is carried out. The determination of receive weight matrix of the block 206r is carried out in the receive weight matrix 306r. In the receive weight matrix multiplying portion 314r and the DPC decoding portion 315r, the multiply of receive weight matrix of the block 210r and the DPC decoding of the block 211r are carried out, respectively. In this manner, the reception procedure described in the second embodiment can be carried out.

**Seventh Embodiment**

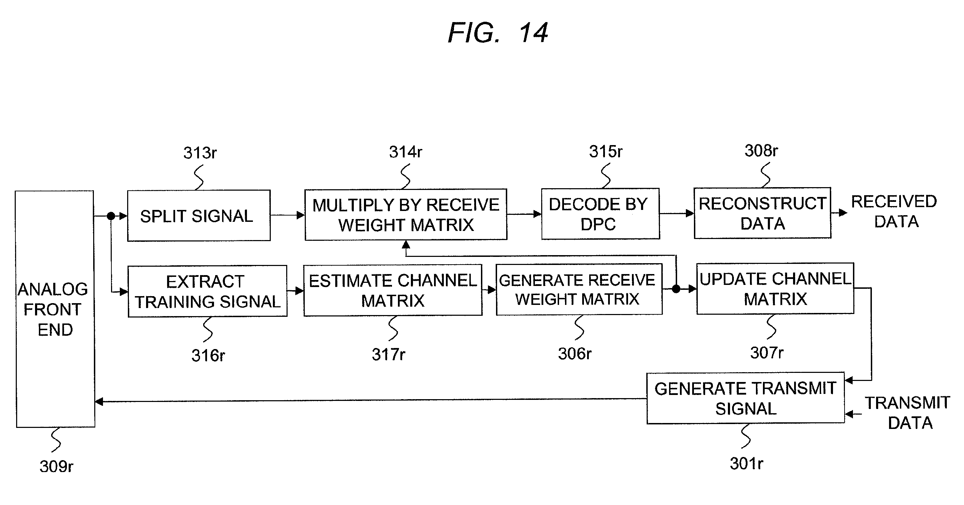

FIG. 14 is a seventh embodiment describing a configuration of a receiver which communicates in the multiuser MIMO wireless communication method of the present invention in the procedure described in the third embodiment.

Transmitted data is converted to a transmitted signal in a transmitted signal generating portion 301r and then transmitted by an analog front end 309r. A received signal is inputted from the analog front end 309r to a signal splitting portion 313r and a training signal extracting portion 316r. Multiplexed signals are split in the signal splitting portion 313r and inputted to a receive weight matrix multiplying portion 314r. In the receive weight matrix multiplying portion 314r, a receive weight matrix obtained from a receive weight matrix generating portion 306r is multiplied with the received signal, and a result of the multiplying is decoded in a DPC decoding portion 315r, thereby obtaining received data from a data reconstructing portion 308r. A training signal is extracted from the received signal in a training signal extracting portion 316r, and a channel matrix is obtained in a channel matrix estimating portion 317r based on a result of the extraction and inputted to the receive weight matrix generating portion 306r. A receive weight matrix is calculated from a channel matrix in the receive weight matrix generating portion 306r and inputted to the receive weight matrix multiplying portion 314r and a channel matrix updating portion 307r. In the channel matrix updating portion 307r, the channel matrix is updated using the inputted receive weight matrix and inputted to the transmitted signal generating portion 301r to transmit to a transmitter.

The transmitted signal generator 301r includes, in accordance with its communication method, a scrambler, an error correction coding portion, a QAM mapper, a transmission power control portion, a MIMO transmission weight multiplying portion, an OFDM multiplexing portion (inverse discrete Fourier transfer), etc.

The signal splitting portion 313r is necessary in a multiplex communication method such as the OFDM method. In the OFDM method, a discrete Fourier transfer is carried out in the signal splitting portion 313r. When the signal multiplexing such as single carrier transmission is not necessary, the signal splitting portion 313r is also not necessary.

In the DPC decoding portion 315r, a decoding processing corresponding to the DPC coding is performed. Specifically, when THP is used in the DPC coding, a residue calculation is performed in the DPC decoding portion 315r.

The data reconstructing portion 308r includes, in accordance with its communication method, a QAM demapper, an error correction decoding portion, a descrambler, etc.

The analog front end 309r mutually converts signals and radio waves and transmits and receives the same, including an antenna, a filter, a signal amplifier, an up/down converter, an orthogonal modulator/demodulator, an AD converter, a DA converter, etc.

In the following, checking from the procedure of the receiver of the third embodiment will be made. The training signal is extracted in the training signal extracting portion 316r from the signal received in the analog front end 309r, and the channel matrix is estimated in the channel matrix estimating portion 317r, thereby carrying out the reception of training signal of the block 202r and the estimation of channel matrix of the block 203r. In the receive weight matrix generating portion 306r and the channel matrix updating portion 307r, the determination of receive weight matrix of the block 206r and the update of channel matrix of the block 207r are carried out, respectively. Channel matrix information is converted to a signal and transmitted from the analog front end 309r, thereby carrying out the transmission of channel matrix of the block 204r. As the signal is received in the analog front end 309r, the data reception of the block 209r is carried out. In the receive weight matrix multiplying portion 314r and the DPC decoding portion 315r, the multiplying of receive weight matrix of the block 210r and the DPC decoding of the block 211r are carried out, respectively. In this manner, the reception procedure described in the third embodiment can be carried out.

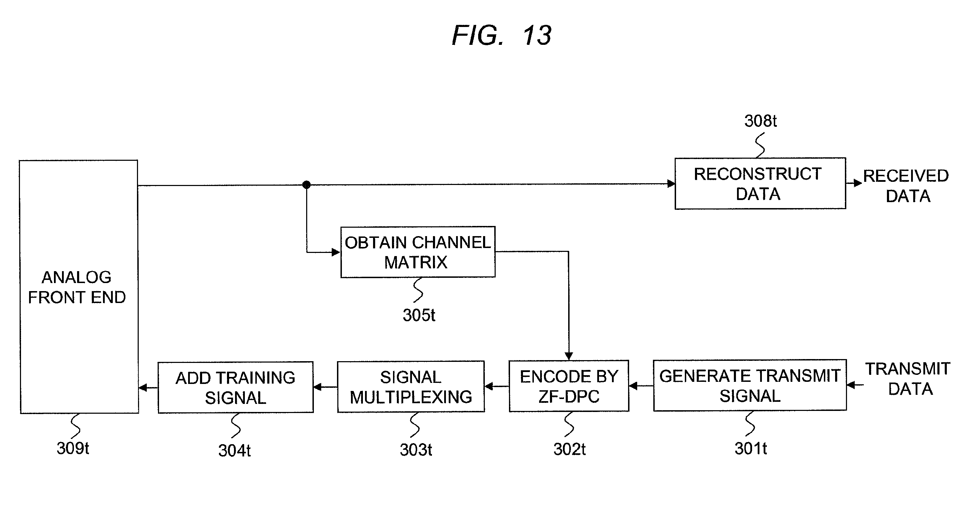

FIG. 13 illustrates a configuration of a transmitter which communicates in the multiuser MIMO wireless communication method of the present invention in the procedure described in the third embodiment. This configuration is the same as that of the transmitter of the existing ZF-DPC method, and, when only the receiver is changed to the configuration described in the present embodiment, the effects of the present invention can be obtained.

**Eighth Embodiment**

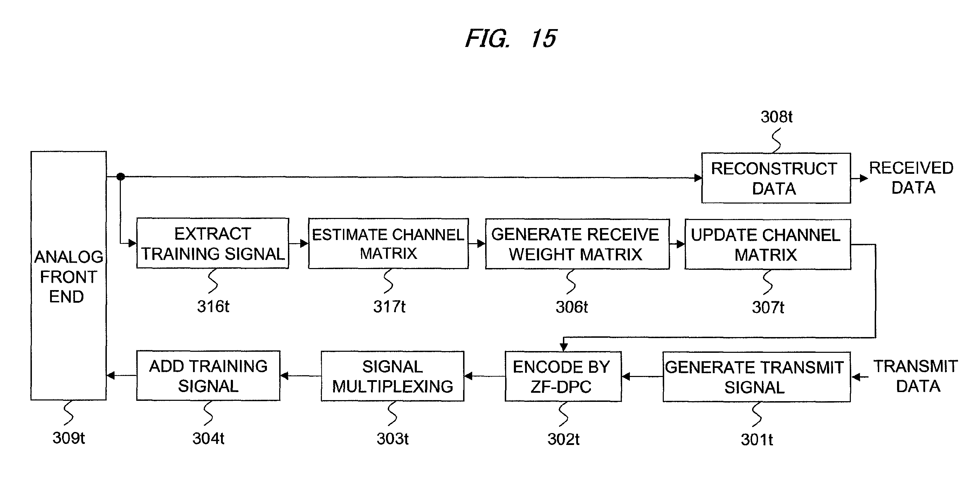

FIG. 15 is an eighth embodiment describing a transmitter which communicates in the multiuser MIMO wireless communication method of the present invention in the procedure described in the fourth embodiment.

Transmitted data is converted to a transmitted signal in a transmitted signal generating portion 301t and then subjected to the ZF-DPC coding in a ZF-DPC coding portion 302t. Thereafter, the transmitted data is subjected to a multiplexing in a signal multiplexing portion 303t, added with the training signal in a training signal adding portion 304t, and transmitted after being inputted to an analog front end 309t. The received signal is inputted from the analog front end 309t to a data reconstructing portion 308t and a training signal extracting portion 316t. Received data is obtained from the data reconstructing portion 308t. In the training signal extracting portion 316t, the training signal is extracted from the received signal and a channel matrix is obtained in a channel matrix estimating portion 317t based on a result of the extraction and inputted to a receive weight matrix generating portion 306t. In the receive weight matrix generating portion 306t, a receive weight matrix is calculated from the channel matrix and inputted to a receive weight matrix updating portion 307t; and the channel matrix is updated in the channel matrix updating portion 307t and inputted to the ZF-DPC coding portion 302t.

The transmitted signal generating portion 301t includes, in accordance with its communication method, a scrambler, an error correction coding portion, a QAM mapper, a transmission power control portion, etc.. Also, the signal to be outputted is a signal vector having a component of a parallel transmission number in the multiuser MIMO wireless communication.

The signal multiplexing portion 303t is necessary in a multiplex communication method such as the OFDM method. In the OFDM method, an inverse discrete Fourier transfer is carried out in the signal multiplexing portion 303t. When a signal multiplexing such as single carrier transmission is not necessary, the signal multiplexing portion 303t is also not necessary.

While the training signal adding portion 304t is disposed immediately before the analog front end 309t, the disposing position of the training signal adding portion 304t is not particularly limited to this. The training signal adding portion 304t may be disposed before the signal multiplexing portion 303t or before the ZF-DPC coding portion 302t.

The analog front end 309t mutually converts signals and radio waves and transmits and receives the same, including an antenna, a filter, a signal amplifier, an up/down converter, an orthogonal modulator/demodulator, an AD converter, a DA converter, etc.

The data reconstructing portion 308t reconstructs data transmitted from the receiver to the transmitter, and includes, in accordance with its communication method, an OFDM splitting portion (discrete Fourier transfer), a MIMO receive weight matrix multiplying portion, a QAM demapper, an error correction decoding portion, a descrambler, etc.

In the following, checking from the procedure of the transmitter of the fourth embodiment will be made. A training signal is extracted by a training signal extracting portion 316t from a signal received in an analog front end 309t and a channel matrix is estimated by a channel matrix estimating portion 317t, thereby carrying out the signal reception of the block 202t and the estimation of channel matrix of the block 203t. In a receive weight matrix generating portion 306t and a channel matrix updating portion 307t, the determination of receive weight matrix 206t and the update of channel matrix of the block 207t are carried out, respectively. As a signal processed in a ZF-DPC coding 302t is transmitted from the analog front end 309t, the data transmission of the block 208t is carried out. A training adding portion 304t adds a training signal upon data transmission so that the channel matrix can be estimated by the receiver. In this manner, the transmission procedure described in the fourth embodiment can be carried out..

### Ninth Embodiment

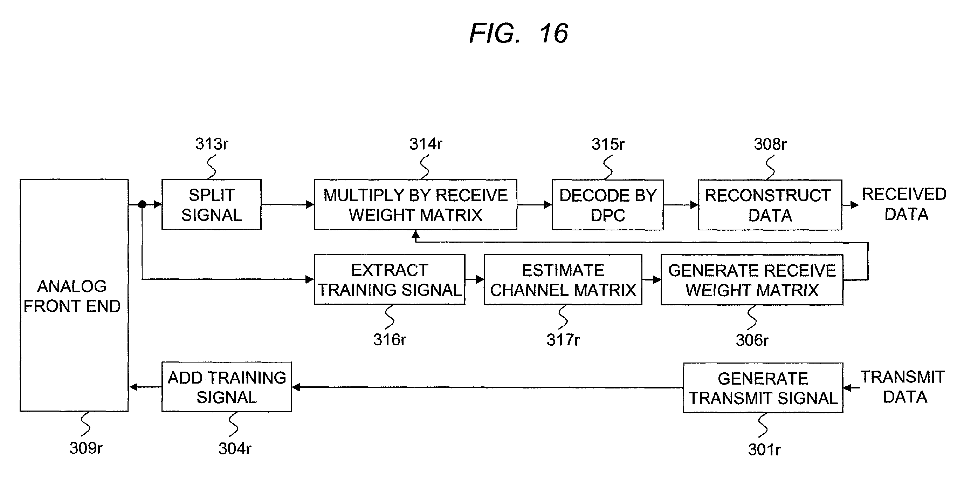

FIG. 16 is a ninth embodiment and illustrates a configuration of a receiver which communicates in the multiuser MIMO wireless communication method of the present invention in the procedure described in the fourth embodiment.

Transmitted data is converted to a transmitted signal in a transmitted signal generating portion 301r and then added with a training signal in a training signal adding portion 304r and transmitted by an analog front end 309r. A received signal is inputted from the analog front end 309r to a signal splitting portion 313r and a training signal extracting portion 316r.. Multiplexed signals are split in the signal splitting portion and inputted to a receive weight matrix multiplying portion 314r. The receive weight matrix multiplying portion 314r multiplies a receive weight matrix obtained from a receive weight matrix generating portion 306r with the received signal, and a result of that is subjected to decoding in a DPC decoding portion 315r, thereby obtaining received data from a data reconstructing portion 308r. A training signal is extracted from the training signal extracting portion 316r, and a channel matrix is obtained by a channel matrix estimating portion 317r based on a result of the extraction and inputted to the receive weight matrix generating portion 306r. The receive weight matrix generating portion 306r calculates a receive weight matrix from the channel matrix and inputs the same to the receive weight matrix multiplying portion 314r.

The transmitted signal generating portion 301r includes, in accordance with its communication method, a scrambler, an error correction coding portion, a QAM mapper, a transmission power control portion, a MIMO transmission weight multiplying portion, an OFDM multiplexing portion (inverse discrete Fourier transfer), etc.

The signal splitting portion 313r is necessary in a multiplex communication method such as the OFDM method. In the OFDM method, a discrete Fourier transfer is performed in the signal splitting portion 313r. When a signal multiplexing such as single carrier transmission is not necessary, the signal splitting portion 313r is also not necessary.

In the DPC decoding portion 315r, a decoding processing corresponding to DPC coding is performed. Specifically, when THP is used in the DPC coding, a residue calculation is performed in the DPC decoding portion 315r.

The data decoding portion 308r includes, in accordance with its communication method, a QAM demapper, an error correction decoding portion, a descrambler, etc.

The analog front end 309r mutually converts signals and radio waves and transmits and receives the same, including an antenna, a filter, a signal amplifier, an up/down converter, an orthogonal modulator/demodulator, an AD converter, a DA converter, etc.

In the following, checking from the procedure of the receiver of the fourth embodiment will be made. By transmitting the training signal added by the training adding portion 304r, the transmission of training signal of the block 201r is carried out. As the signal is received by the analog front end 309r, the data transmission of the block 209r is carried out.. A training signal is extracted in the training signal extracting portion 316r and a channel matrix is estimated by the channel matrix estimating portion 317r, thereby carrying out the estimation of channel matrix of the block 203r. The determination of receive weight matrix of the block 206r is carried out in the receive weight matrix 306r. In a receive weight matrix multiplying portion 314r and a DPC decoding portion 315r, the multiplying of receive weight matrix of the block 210r and the DPC decoding of the block 211r are carried out, respectively. In this manner, the receiving procedure described in the fourth embodiment can be carried out.

## INDUSTRIAL APPLICABILITY

According to the present invention, a computing amount regarding the multiuser MIMO method can be reduced. Accordingly, a reduction of circuit size and shortening of delay to data transmission can be achieved.

Also, achievement of a communication speed close to a theoretical limitation.

## Claims

1. A method of multiuser MIMO wireless communication of transmitting from a first wireless communication device to N devices of 2-1 to 2-N wireless communication devices using a same frequency band and a same duration, the multiuser MIMO wireless communication method comprising:

    a first step of estimating a channel matrix between the first wireless communication device and the 2-1 to 2-N wireless communication devices;
    a second step of determining a receive weight matrix to be multiplied with a received signal vector in the 2-1 to 2-N wireless communication devices;
    a third step of updating the channel matrix by a product of the receive weight matrix and the channel matrix;
    a fourth step of decomposing a channel matrix by an LQ decomposition of the updated channel matrix into a lower triangular matrix L and a unitary matrix Q;
    a fifth step of subjecting a transmitted signal vector to a DPC coding based on the lower rectangular matrix L;
    a sixth step of transmitting a transmitted signal vector obtained by multiplying a conjugate transpose matrix of the unitary matrix Q with the coded transmitted signal vector from the first wireless communication device;
    a seventh step of multiplying the determined receive weight matrix with the received signal vectors received by the 2-1 to 2-N wireless communication devices; and
    an eighth step of subjecting the received signal vectors obtained by the multiplication of the receive weight matrix to a DPC decoding.

2. The method of multiuser MIMO wireless communication according to claim 1, wherein, in the second step, a conjugate transpose matrix of a left singular matrix obtained by a singular decomposition of the channel matrix is taken as the receive weight matrix.

3. The method of multiuser MIMO wireless communication according to claim 1, wherein, in the second step, a matrix obtained by a product of the channel matrix and the conjugate transpose matrix is subjected to a QR decomposition, and a conjugate transpose matrix of a unitary matrix obtained by the QR decomposition is taken as the receive weight matrix.

4. A device of multiuser MIMO wireless communication which transmitting from a first wireless communication device to N devices of 2-1 to 2-N wireless communication devices using a same frequency band and a same duration, wherein

    the first wireless communication device includes a functional block carrying out:
    a first step of determining a receive weight matrix to be multiplied with a received signal vector in the 2-1 to 2-N wireless communication devices;
    a second step of updating the channel matrix by multiplying the receive weight matrix and the channel matrix;

a third step of decomposing the channel matrix into a lower triangular matrix L and a unitary matrix Q by an LQ decomposition of the updated channel matrix;

a fourth step of subjecting a transmitted signal vector to a DPC coding based on the lower triangular matrix L; and

a fifth step of transmitting a transmitted signal vector obtained by multiplying the coded transmitted signal vector with a conjugate transpose matrix of the unitary matrix Q to the 2-1 to 2-N wireless communication devices.

5. The device of multiuser MIMO wireless communication according to claim 4, wherein the first wireless communication device takes, in the first step, a conjugate transpose matrix of a left singular matrix of a singular decomposition of the channel matrix as the receive weight matrix.

6. The device of multiuser MIMO wireless communication according to claim 4, wherein the first wireless communication device takes, in the first step, a matrix obtained by a product of the channel matrix and the conjugate transpose matrix of the channel matrix is subjected to a QR decomposition, and a conjugate transpose matrix of a unitary matrix obtained by the QR decomposition is taken as the receive weight matrix.

7. The device of multiuser MIMO wireless communication according to claim 4, wherein the first wireless communication includes a functional block that carries out a sixth step of obtaining the channel matrix by information received from the 2-1 to 2-N wireless communication devices.

8. The device of multiuser MIMO wireless communication according to claim 4, wherein the first wireless communication device includes a functional block that carries out a seventh step of estimating the channel matrix from a training signal for estimating a channel matrix received from the 2-1 to 2-N wireless communication devices.

9. A device of multiuser MIMO wireless communication which transmitting from a first wireless communication device to N devices of 2-1 to 2-N wireless communication devices using a same frequency band and a same duration, wherein the 2-1 to 2-N wireless communication devices include a functional block carrying out:

a first step of estimating a channel matrix from a training signal for estimating a channel matrix received from the first wireless communication device;

a second step of determining receive weight matrices to be multiplied with a received signal vector in the 2-1 to 2-N wireless communication devices;

a third step of multiplying the determined receive weight matrix with the received signal vector received from the first wireless communication device; and

a fourth step of subjecting a received signal vector obtained from a product of the receive weight matrix to a DPC decoding.

10. The device of multiuser MIMO wireless communication according to claim 9, wherein the 2-1 to 2-N wireless communication devices take, in the second step, a conjunction transpose matrix of a left singular matrix of a singular decomposition of the channel matrix as the receive weight matrix.

11. The device of multiuser MIMO wireless communication according to claim 9, wherein the 2-1 to 2-N wireless communication devices take, in the second step, a matrix obtained by a product of the channel matrix and the conjugate transpose matrix of the channel matrix is subjected to a QR decomposition, and a conjugate transpose matrix of a unitary matrix obtained by the QR decomposition is taken as the receive weight matrix.

12. The device of multiuser MIMO wireless communication according to claim 9, wherein the 2-1 to 2-N wireless communication devices include a functional block carrying out a fifth step of transmitting channel information obtained in the first step to the first wireless communication device.

13. The device of multiuser MIMO wireless communication according to claim 9, wherein the 2-1 to 2-N wireless communication devices include a functional block carrying out:

a sixth step of updating a channel matrix by a product of the receive weight matrix determined in the second step and the receive weight matrix estimated in the first step; and

a seventh step of transmitting the channel matrix information updated in the sixth step.

**14.** The device of multiuser MIMO wireless communication according to claim 9, wherein the 2-1 to 2-N wireless communication devices include a functional block carrying out an eighth step of transmitting a training signal for estimating a channel matrix to the first wireless communication device.

# FIG. 1

START

ESTIMATE CHANNEL MATRIX $H_i$  ∿101

DECIDE WEIGHT MATRIX $R_i$  ∿102

UPDATE CHANNEL MATRIX: $H_i \leftarrow R_i H_i$  ∿103

DATA TRANSMISSION BY ZF-DPC  ∿104

MULTIPLY RECEIVED SIGNAL VECTOR BY RECEIVE WEIGHT MATRIX $R_i$  ∿105

DECODE RECEIVED SIGNAL BY DPC  ∿106

END

# FIG. 2

# FIG. 3

DECIDE RECEIVE WEIGHT MATRIX $R_i$

SINGULAR VALUE DECOMPOSITION: $H_i = U_i S_i V_i^{\mathrm{H}}$ ～111

RECEIVE WEIGHT MATRIX: $R_i = U_i^{\mathrm{H}}$ ～112

RETURN

## FIG. 4

$$\text{DECIDE RECEIVE WEIGHT MATRIX } R_i$$

$$\downarrow$$

$$\text{QR DECOMPOSITION}: H_i H_i^{\text{H}} = Q'_i R'_i \quad \sim 113$$

$$\downarrow$$

$$\text{RECEIVE WEIGHT MATRIX}: R_i = Q'^{\text{H}}_i \quad \sim 114$$

$$\downarrow$$

$$\text{RETURN}$$

## FIG. 5

$$\text{DATA TRANSMISSION BY ZF-DPC}$$

$$\downarrow$$

$$\text{LQ DECOMPOSITION}: [H_1; H_2; ...; H_N] = LQ \quad \sim 107$$

$$\downarrow$$

$$\text{ENCODE TRANSMIT SIGNAL BY DPC BASED ON LOWER TRIANGULAR MATRIX } L \quad \sim 108$$

$$\downarrow$$

$$\text{MULTIPLY BY MATRIX } Q^{\text{H}} \quad \sim 109$$

$$\downarrow$$

$$\text{TRANSMIT} \quad \sim 110$$

$$\downarrow$$

$$\text{RETURN}$$

## FIG. 6

# FIG. 7

```
        ┌─────────────────┐                                    ┌─────────────────┐
        │   TRANSMITTER    │                                    │  RECEIVER i (i=1~N) │
        │     START        │                                    │     START        │
        └────────┬────────┘                                    └────────┬────────┘
                 │                                                       │
                 ▼                                                       ▼
201t ┌─────────────────────────────┐         ┌─────────────────────────────┐ 202r
     │  TRANSMIT TRAINING SIGNAL    │ - - - ▶ │   RECEIVE TRAINING SIGNAL    │
     └──────────────┬──────────────┘         └──────────────┬──────────────┘
                    │                                        ▼
                    │                         ┌─────────────────────────────┐ 203r
                    │                         │  ESTIMATE CHANNEL MATRIX Hᵢ  │
                    │                         └──────────────┬──────────────┘
                    ▼                                        │
205t ┌─────────────────────────────┐         ┌─────────────────────────────┐ 204r
     │  RECEIVE CHANNEL MATRIX Hᵢ   │ ◀ - - - │  TRANSMIT CHANNEL MATRIX Hᵢ  │
     └──────────────┬──────────────┘         └──────────────┬──────────────┘
                    ▼                                        │
206t ┌─────────────────────────────┐                        │
     │ DECIDE RECEIVE WEIGHT MATRIX Rᵢ │                     │
     └──────────────┬──────────────┘                        │
                    ▼                                        │
207t ┌─────────────────────────────┐                        │
     │ UPDATE CHANNEL MATRIX :Hᵢ←RᵢHᵢ │                     │
     └──────────────┬──────────────┘                        │
                    ▼                                        ▼
208t ┌─────────────────────────────┐         ┌─────────────────────────────┐ 209r
     │   TRANSMIT DATA BY ZF-DPC    │ - - - ▶ │        RECEIVE DATA          │
     └──────────────┬──────────────┘         └──────────────┬──────────────┘
                    │                                        ▼
                    │                         ┌─────────────────────────────┐ 206r
                    │                         │ DECIDE RECEIVE WEIGHT MATRIX Rᵢ │
                    │                         └──────────────┬──────────────┘
                    │                                        ▼
                    │                         ┌─────────────────────────────┐ 210r
                    │                         │ MULTIPLY BY RECEIVE WEIGHT MATRIX Rᵢ │
                    │                         └──────────────┬──────────────┘
                    │                                        ▼
                    │                         ┌─────────────────────────────┐ 211r
                    │                         │        DECODE BY DPC         │
                    │                         └──────────────┬──────────────┘
                    ▼                                        ▼
              ┌─────────┐                             ┌─────────┐
              │   END   │                             │   END   │
              └─────────┘                             └─────────┘
```

201t ∿ TRANSMIT TRAINING SIGNAL — RECEIVE TRAINING SIGNAL ∿ 202r

ESTIMATE CHANNEL MATRIX $H_i$ ∿ 203r

205t ∿ RECEIVE CHANNEL MATRIX $H_i$ — TRANSMIT CHANNEL MATRIX $H_i$ ∿ 204r

206t ∿ DECIDE RECEIVE WEIGHT MATRIX $R_i$

207t ∿ UPDATE CHANNEL MATRIX : $H_i \leftarrow R_i H_i$

208t ∿ TRANSMIT DATA BY ZF-DPC — RECEIVE DATA ∿ 209r

DECIDE RECEIVE WEIGHT MATRIX $R_i$ ∿ 206r

MULTIPLY BY RECEIVE WEIGHT MATRIX $R_i$ ∿ 210r

DECODE BY DPC ∿ 211r

EP 2 343 847 A1

## FIG. 8

TRANSMITTER
START

201t → TRANSMIT TRAINING SIGNAL

RECEIVER $i$ ($i$=1~$N$)
START

202r — RECEIVE TRAINING SIGNAL

203r — ESTIMATE CHANNEL MATRIX $H_i$

206r — DECIDE RECEIVE WEIGHT MATRIX $R_i$

207r — UPDATE CHANNEL MATRIX: $H_i \leftarrow R_i H_i$

205t → RECEIVE CHANNEL MATRIX $H_i$

204r — TRANSMIT CHANNEL MATRIX $H_i$

208t → TRANSMIT DATA BY ZF-DPC

209r — RECEIVE DATA

210r — MULTIPLY BY RECEIVE WEIGHT MATRIX $R_i$

211r — DECODE BY DPC

END

END

EP 2 343 847 A1

## FIG. 9

**TRANSMITTER START**

| | |
|---|---|
| 202t | RECEIVE TRAINING SIGNAL |
| 203t | ESTIMATE CHANNEL MATRIX $H_i$ |
| 206t | DECIDE RECEIVE WEIGHT MATRIX $R_i$ |
| 207t | UPDATE CHANNEL MATRIX: $H_i \leftarrow R_i H_i$ |
| 208t | TRANSMIT DATA BY ZF-DPC |

**END**

**RECEIVER $i$ ($i=1\sim N$) START**

| | |
|---|---|
| TRANSMIT TRAINING SIGNAL | 201r |
| RECEIVE DATA | 209r |
| ESTIMATE CHANNEL MATRIX $H_i$ | 203r |
| DECIDE RECEIVE WEIGHT MATRIX $R_i$ | 206r |
| MULTIPLY BY RECEIVE WEIGHT MATRIX $R_i$ | 210r |
| DECODE BY DPC | 211r |

**END**

EP 2 343 847 A1

EP 2 343 847 A1

# FIG. 10

## FIG. 11

CHANNEL MATRIX    302t

┌─────────────────────────────────────────────────────────────┐
│                                                               │
│              LQ DECOMPOSITION  ⌇310t                          │
│                                                               │
│         Q                          L                          │
│                                                               │
│  ┌──────────────────────┐   ┌──────────────────┐             │
│  │      MULTIPLY BY      │   │  ENCODE BY DPC   │◄── TRANSMIT SIGNAL
│  │ TRANSMIT WEIGHT MATRIX│◄──│                  │             │
│  └──────────────────────┘   └──────────────────┘             │
└─────────────────────────────────────────────────────────────┘

TRANSMIT SIGNAL
ENCODED BY ZF-DPC

312t                             311t

EP 2 343 847 A1

## FIG. 12

## FIG. 13

```
                                                      308t
                                                       )
ANALOG          ·────────────────────────────▶ RECONSTRUCT ──▶ RECEIVED
FRONT END       │                                  DATA           DATA
                │
                │              OBTAIN CHANNEL
                └────────────▶    MATRIX
                                    )
                                   305t

          ADD TRAINING ◀── SIGNAL ◀── ENCODE BY ◀── GENERATE TRANSMIT ◀── TRANSMIT
            SIGNAL      MULTIPLEXING    ZF-DPC          SIGNAL              DATA
              )             )            )               )
            309t / 304t    303t        302t            301t
```

FIG. 14

FIG. 15

EP 2 343 847 A1

## FIG. 16

EP 2 343 847 A1

<div align="center">

**INTERNATIONAL SEARCH REPORT**

</div>

| | International application No. |
|---|---|
| | PCT/JP2008/069540 |

**A.    CLASSIFICATION OF SUBJECT MATTER**
*H04J99/00*(2009.01)i, *H04B7/005*(2006.01)i, *H04B7/04*(2006.01)i

According to International Patent Classification (IPC) or to both national classification and IPC

**B.    FIELDS SEARCHED**

Minimum documentation searched (classification system followed by classification symbols)
H04J99/00, H04B7/005, H04B7/04

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | Jianqi Wang, David J.Love, Michael D.Zoltowski, "User Selection With Zero-Forcing Beamforming Achieves the Asymptotically Optimal Sum Rate", IEEE TRANSACTIONS ON SIGNAL PROCESSING, VOL.56, NO.8, pp.3713-3726 | 1-14 |
| Y | Peilu Ding, David J.Love, Michael D. Zoltowski, "Multiple Antenna Broadcast Channels With Shape Feedback and Limited Feedback", IEEE TRANSACTIONS ON SIGNAL PROCESSING, VOL.55, NO7, pp.3417-3428 | 1-14 |
| Y | James S.Kim, Hojin Kim, Kwang Bok Lee, "Limited Feedback Signaling for MIMO Broadcast Channels", Signal Processing Advances in Wireless Communications, 2005 IEEE 6th Workshop on, pp.855-859 | 1-14 |

☐  Further documents are listed in the continuation of Box C.     ☐   See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 January, 2009 (22.01.09) | 03 February, 2009 (03.02.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008519510 PCT

**Non-patent literature cited in the description**

- **S. Vishwanath ; N. Jindal ; A. Goldsmith.** Duality, achievable rates, and sum-rate capacity of gaussian MIMO broadcast channels. *IEEETrans. Inform. Theory,* October 2003, vol. 49 (10), 2658-2668
- **M. H. M. Costa.** Writing on dirty paper. *IEEE Trans. Inform. Theory,* May 1983, vol. 29 (3), 439-441
- **Z. Tu ; R. S. Blum.** Multiuser diversity for a dirty paper approach. *IEEE Commun. Lett.,* August 2003, vol. 7 (8), 370-372

- **S. Vishwanath ; N. Jindal ; A. Goldsmith.** Duality, achievable rates, and sum-rate capacity of gaussian MIMO broadcast channels. *IEEE Trans. Inform. Theory,* October 2003, vol. 49 (10), 2658-2668
- **Z.. Tu ; R. S. Blum.** Multiuser diversity for a dirty paper approach. *IEEE Commun. Lett.,* August 2003, vol. 7 (8), 370-372